# EUROPEAN PATENT APPLICATION

(11) **EP 3 854 667 A1**
(43) Date of publication of application: **28.07.2021**
(21) Application number: 21152343.6
(22) Date of filing: 19.01.2021
(51) Int. Cl.: B62K 3/00, B62K 15/00, B62J 43/13, B62J 43/28, B62K 25/00

(54) **A FOLDABLE SCOOTER**

(30) Priority: 23.01.2020 IT 202000001312
(71) Applicant: Linkable S.r.l., 67100 L'Aquila (IT)
(72) Inventor: GUIDETTI, Francesco, I-67100 L'Aquila (IT); JUSTIN, Andrej, I-67100 L'Aquila (IT)
(74) Representative: Leihkauf, Steffen Falk

(57) **Abstract**

A foldable scooter (1) comprising an elongated deck body (10) defining a longitudinal scooter axis (L-L) arranged along a main direction of development of said deck body (10) and defining an upper deck surface (11) adapted to support a person standing on said upper deck surface (11), said upper deck surface (11) being substantially flat and parallel to said longitudinal scooter axis (L-L); a front wheel (20) and a rear wheel (21) rotatably connected to a front end (10') and to a rear end (10''), respectively, of said deck body (10) so as to rotate about respective wheel rotation axes (20', 21') arranged orthogonal to said longitudinal scooter axis (L-L) and parallel to said upper deck surface (11); a steering device (30) adapted to rotate the rotation axis of said front wheel (20') with respect to said deck body (10) about a steering axis (S-S), which is substantially orthogonal to said front wheel rotation axis (20'), to allow a change of the forward direction of said scooter (1); wherein said deck body (10) consists of a front half-body (15) and a rear half-body (16) hinged to each other about a hinge axis (C-C), tilted with respect to the longitudinal scooter axis (L-L) of a predetermined angle (α) so as to allow the configuration of said scooter (1) to be varied between an open use configuration, in which said front half-body (15) and said rear half-body (16) are aligned along said longitudinal scooter axis (L-L), and a folded reduced encumbrance configuration, in which said front half-body (15) and said rear half-body (16) are mutually rotated so as to bring the front wheel (20) and the rear wheel (21) side by side and parallel to each other and to the rotation axis of the front wheel (20') coaxially overlapping the rotation axis of the rear wheel (21').

## Description

### Field of the invention

The present invention relates to a scooter with two wheels capable of being folded when not in use so as to be easily carried by hand or stored.

### Background art

Scooters are a convenient and light individual means of transport, allowing users to get around the city easily and cross areas of the city, in which the use of other means of transport is prohibited, such as, for example, areas with limited traffic or pedestrianized areas.

Such areas where it is possible to use a scooter are often interspersed with areas where it is not allowed, therefore, users are invited to get off the scooter, pick it up and carry it by hand.

For example, in the underground it is often prohibited, or at least, unadvised, to carry bulky objects, especially during rush hour.

Among other things, the integration of an electric propulsion system in scooters has also recently led to a considerable increase in such means of travel.

In this context, the need is felt to provide a scooter, which can be folded into a reduced configuration.

However, due to the need for a support deck, which has to be wide in order to provide adequate support for a user standing thereupon, the known attempts to reduce the encumbrance in a closed scooter configuration, have provided limited success.

In particular, such known attempts are not restricted to the folding of the handlebar along the deck, but the same, and therefore, the total dimensions of the means are nonetheless cumbersome.

Thus, the need is felt to provide a scooter capable of being folded in a closed minimum encumbrance configuration, which is truly compact and poorly cumbersome.

### Summary of the invention

It is the object of the present invention to develop and provide a scooter, which allows the aforesaid needs to be met, at least partially overcoming the above drawbacks with reference to the prior art.

In particular, it is a task of the present invention to provide a scooter, which allows it to be folded on itself in a closed configuration, which is compact and has a highly reduced encumbrance.

These and further objects and advantages are achieved by means of a scooter according to the independent claim 1.

Further objects, solutions, and advantages are present in the embodiments described below and claimed in the dependent claims.

### Brief description of the drawings

The invention will be disclosed below by describing some embodiments thereof by way of non-limiting example, with reference to the accompanying drawings, wherein:

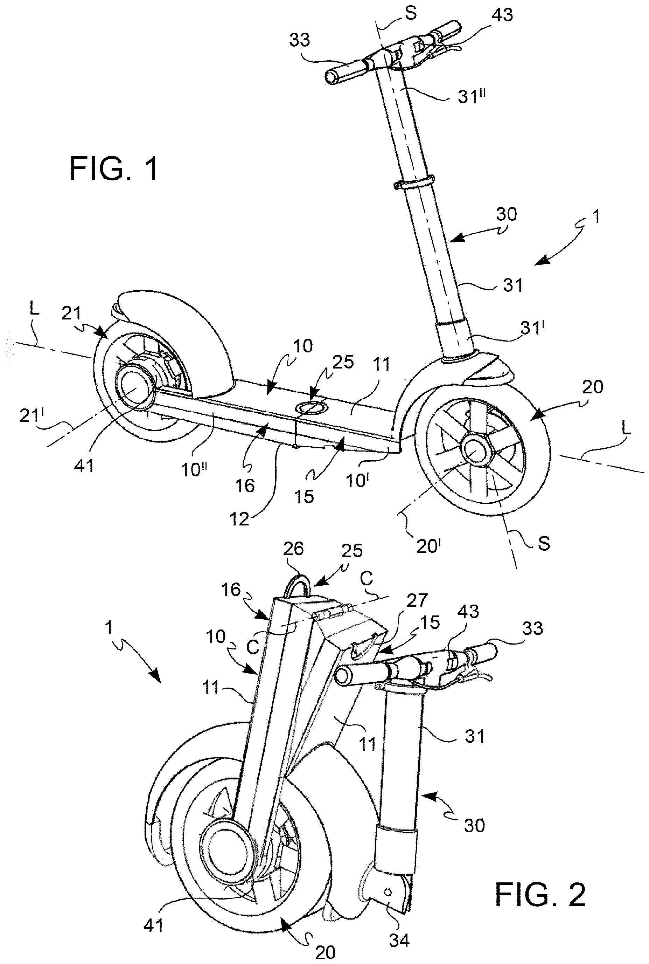

- figure 1 illustrates a perspective view of a foldable scooter according to the invention, when it is in the open use configuration;
- figure 2 illustrates a perspective view of the foldable scooter in figure 1, when it is in the closed, reduced encumbrance configuration;

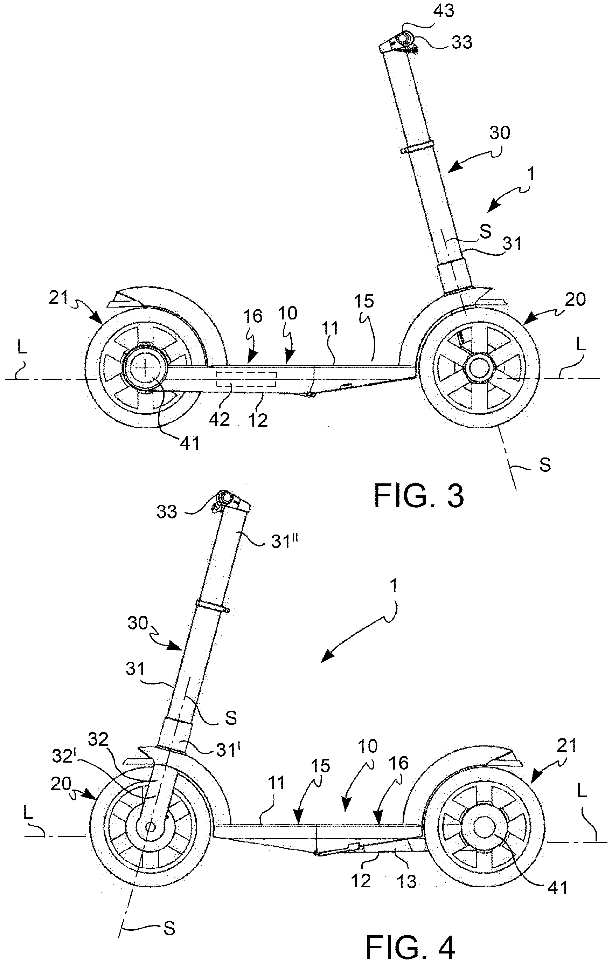

- figure 3 shows a side view from right of the scooter in figure 1 in an open configuration;
- figure 4 shows a side view from left of the scooter in figure 1 in an open configuration;

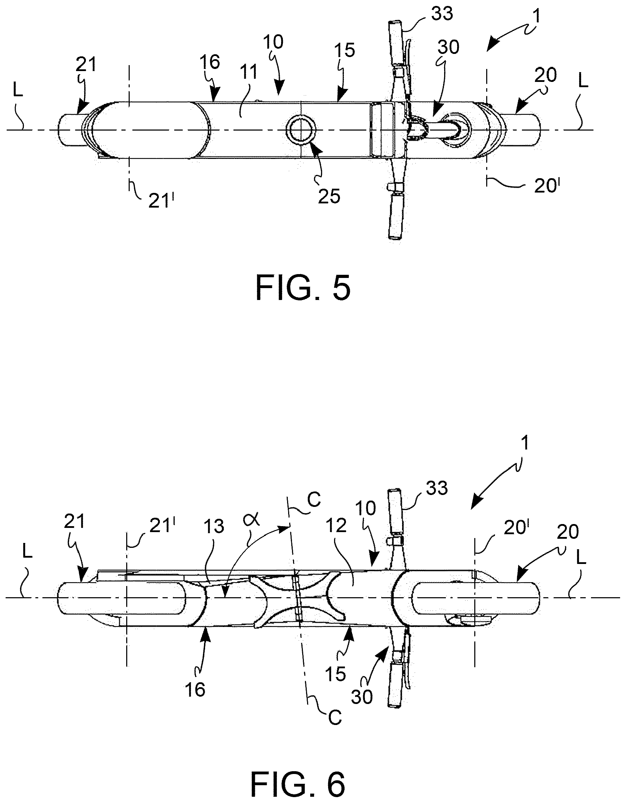

- figure 5 shows a view from above of the scooter in figure 1 in an open configuration;
- figure 6 shows a view from below of the scooter in figure 1 in an open configuration;

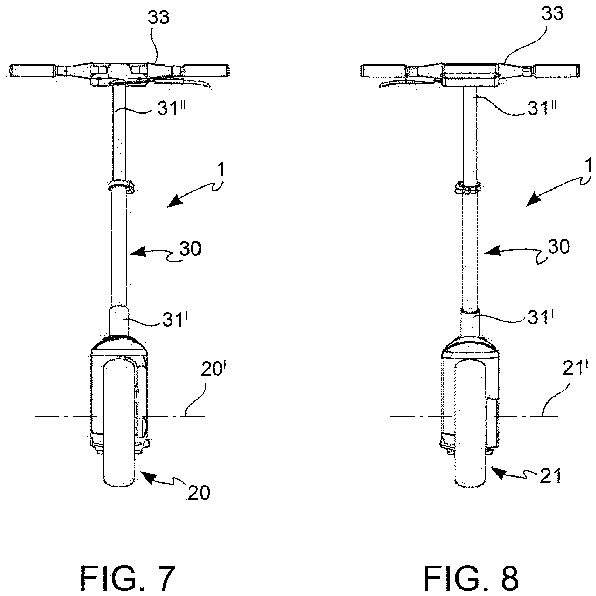

- figure 7 shows a front view of the scooter in figure 1 in an open configuration;
- figure 8 shows a rear view of the scooter in figure 1 in a closed configuration;

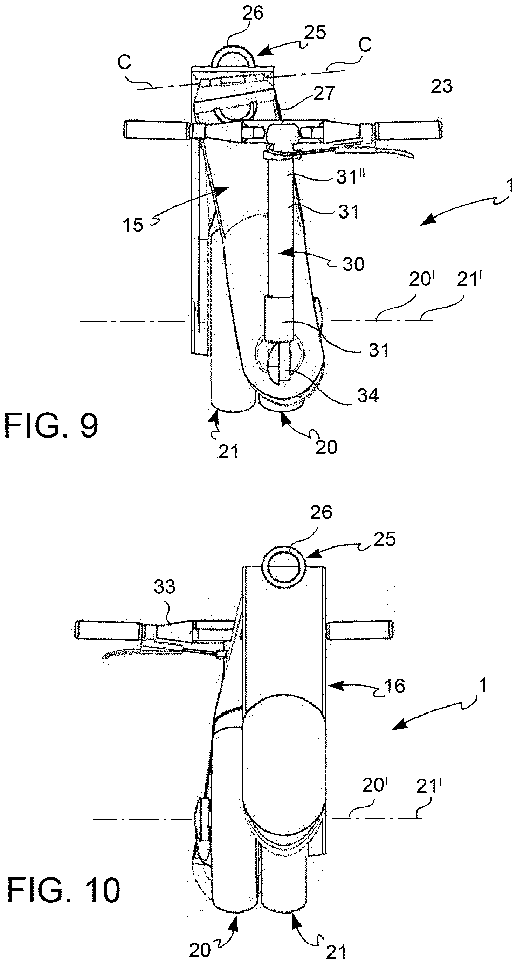

- figure 9 shows a front view of the scooter in figure 2 in a closed configuration;
- figure 10 shows a rear view of the scooter in figure 2 in a closed configuration;

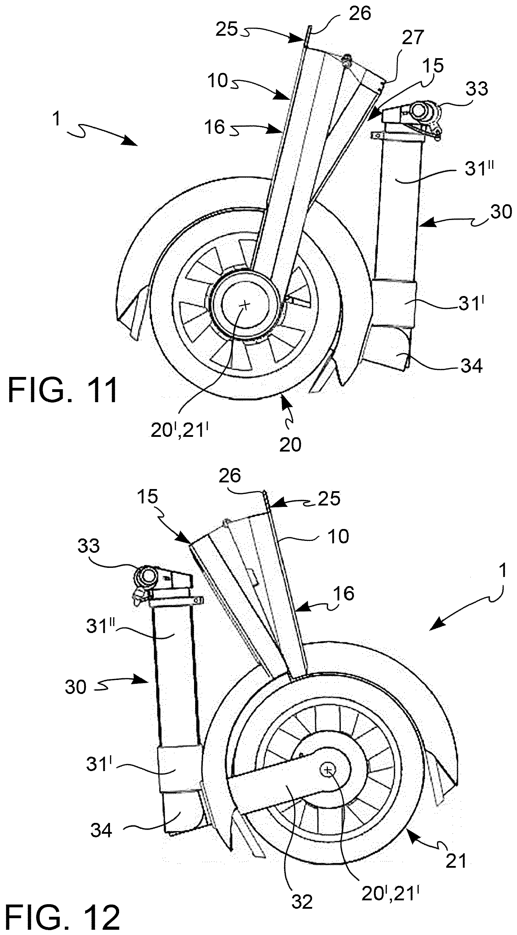

- figure 11 shows a side view from right of the scooter in figure 2 in a closed configuration;
- figure 12 shows a side view from left of the scooter in figure 2 in a closed configuration;
- figure 13 shows a first gripping mode of the scooter shown in figure 2 in a closed configuration;
- figure 14 shows a second gripping mode of the scooter shown in figure 2 in a closed configuration.

### Description of the preferred embodiments

With reference to the figures, a foldable scooter according to the invention is globally denoted with reference numeral 1.

The foldable scooter comprises an elongated deck body 10 defining a longitudinal scooter axis L-L arranged along a main direction of development of said deck body 10 and defining an upper deck surface 11 adapted to support a person standing on said upper deck surface 11, said upper deck surface 11 being substantially flat and parallel to said longitudinal scooter axis L-L.

Furthermore, the scooter 1 comprises a front wheel 20 and a rear wheel 21 rotatably connected to a front end 10' and to a rear end 10" of said deck body 10, respectively, so as to rotate about respective rotation wheel axes 20', 21' arranged orthogonal to said longitudinal scooter axis L-L and parallel to said upper deck surface 11.

The scooter 1 further comprises a steering device 30 adapted to rotate the rotation axis of said front wheel 20' with respect to said deck body 10 about a steering axis S-S, which is substantially orthogonal to said front wheel rotation axis 20', to allow a change in the forward direction of said scooter 1.

The deck body 10 consists of a front half-body 15 and a rear half-body 16 hinged to each other about a hinge axis C-C tilted with respect to the longitudinal scooter axis L-L by a predetermined angle α so as to allow the configuration of said scooter 1 to be varied between an open use configuration, in which said front half-body 15 and said rear half-body 16 are aligned along said longitudinal scooter axis L-L, and a folded, reduced encumbrance configuration, in which said front half-body 15 and said rear half-body 16 are mutually rotated so as to bring the front wheel 20 and the rear wheel 21 side by side and parallel to each other and to the rotation axis of the front wheel 20' coaxially overlapping the rotation axis of the rear wheel 21'.

According to an embodiment, the predetermined angle α is between about 65° and 85°, preferably about 75°.

The predetermined angle α is calculated so as to allow the front half-body 15 and the rear half-body 16 to come side by side at a minimum distance from each other in the closed scooter configuration.

In particular, the value of the predetermined angle α is calculated as a function of the wheelbase and the dimensions of the wheels.

In this way, when the scooter is in the closed configuration, it has an overall highly compact shape and reduced encumbrance because not only are the wheels strictly mutually side by side, but also the deck half-bodies are strictly close to each other.

According to an embodiment, the hinge axis C-C lies on a hinge plane parallel to the upper deck surface 11, i.e. the hinge axis C-C is parallel to the upper deck surface 11 and at the same time tilted with respect to the longitudinal axis L-L, of the aforesaid predetermined angle α.

According to an embodiment, the hinge axis C-C is arranged on a lower deck surface 12 opposite to said upper deck surface.

In other words, the front half-body 15 and the rear half-body 16 are hinged to each other at the lower surface of the deck body 10.

According to an embodiment, the front half-body 15 and the rear half-body 16 have a shape such as to join each other with shape continuity when said scooter 1 is in the open use configuration.

In this way, when the scooter is in the open configuration, the deck body 10 shows no evident signs of separation between the half-bodies, giving the impression of stability and continuity.

According to an embodiment, the lower deck surface 12 comprises at least one tapered surface portion 13 configured to allow said front half-body and said rear half-body to approach each other at a minimum distance when said scooter 1 is in a closed, reduced encumbrance configuration.

In other words, during the folding of the scooter 1, i.e. during the relative rotation between the front half-body 15 and the rear half-body 16 in order to pass from the open configuration to the closed configuration, this tapered surface portion allows a simultaneous precise and fluid relative sliding between such half-bodies.

According to an embodiment, the scooter 1 comprises a locking device 25 for removably locking the front half-body 15 and the rear half-body 16 to each other when said scooter 1 is in the open use configuration.

According to an embodiment, the locking device 25 comprises an anchoring element 26 movably mounted to one of said front half-body 15 and rear half-body 16, which is adapted to be engaged by interlocking in a corresponding cavity 27, or groove, with a complementary shape in the other of said front half-body 15 and rear half-body 16.

For example, the anchoring element 26 is constrained to the rear half-body 16 and is engageable in a complementary groove 27 in the front half-body 15.

In an embodiment, the locking device is arranged at the upper deck surface 11.

The locking device 25 can be configured so as to release the front half-body 15 from the rear half-body 16, by means of a lifting movement of said anchoring element 26.

According to an embodiment, the anchoring element 26 has an annular or oval shape.

In this way, when the annular or oval anchoring element 26 is lifted to release the front half-body 15 from the rear half-body 16, such anchoring element can be used as a gripping handle to facilitate the closure of the scooter and lift it.

According to an embodiment, the steering device 30 comprises an elongated steering element 31 defining a lower end 31' and an opposite upper end 31" of the elongated steering element 31.

Such elongated steering element 31 is rotationally engaged with said deck body 10 at said lower end of the elongated steering element 31' to rotate about said steering axis S-S.

The steering device 30 comprises a front fork element 32 secured to said lower end 31' of said elongated steering element 31, to which front fork element 32, the front wheel 20 is rotatably constrained to rotate about the front wheel rotation axis 20'.

The steering device 30 can comprise a grippable handlebar 33 secured to said upper end 31" of the elongated steering element.

According to an embodiment, said elongated steering element 31 comprises a joint device 34 arranged to rotate said elongated steering element 31 in order to approach said deck body 10, when said scooter 1 is in a closed, reduced encumbrance configuration.

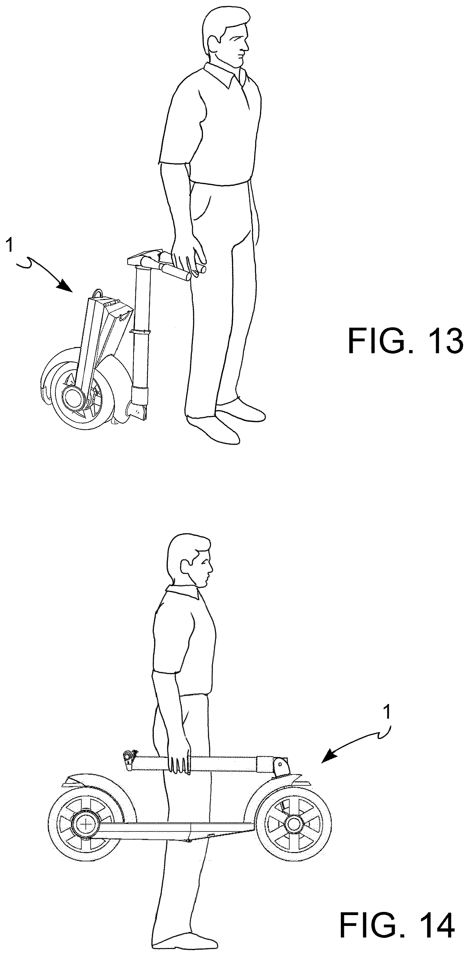

In the closed scooter configuration, and with the elongated steering element 31 folded close to said front half-body 15, it not only allows the encumbrance to be reduced, but also the dragging thereof, as shown, for example, in figure 13.

According to an embodiment, the grippable handlebar 33 comprises two opposite free gripping ends, in which said free gripping ends are rotatable on mutually approaching with respect to said elongated steering element 31, for example, about one or more axes parallel to the steering axis S-S.

This allows a further reduction in the encumbrance of the scooter in the closed configuration, and a more convenient gripping of the free gripping ends during the dragging by hand.

For example, the free gripping ends are rotatable about one or more axes orthogonal to the steering axis S-S.

In this way, in the closed configuration, the scooter can easily be inserted into the trunk of a car having an elongated shape.

According to an embodiment, the joint device 34 has only one rotation axis, preferably substantially parallel to the rotation axis 20' of the front wheel 20.

According to an embodiment, the elongated steering element is telescopically extensible.

According to an embodiment, the front fork element 32 has only one arm 32' extending only on a first side of the front wheel 20 thus leaving the opposite second side of the front wheel 20 free, said second wheel side being adapted to face the rear wheel 21 when the scooter 1 is in the closed, reduced encumbrance configuration.

In this way, when the scooter is in the closed, reduced encumbrance configuration, the front wheel 20 can be brought to a minimum distance from the rear wheel 21, by virtue of not having interposed encumbrances.

According to an embodiment, the scooter 1 comprises an electric motor 41 associated with said rear wheel 21 or said front wheel 20, or two different electric motors each associated with a respective one of said front wheel and rear wheel, an electric battery 42 mounted on board said scooter 1 and adapted to power said electric motor 41, control means 43 for controlling said electric motor 41.

Preferably, the electric motor 41 is mounted in the rear wheel 21.

Preferably, the control means 43 are mounted at the grippable handlebar 33.

According to an embodiment, the electric battery 41 is accommodated inside said deck body 10 or inside said steering device 30.

Preferably, the electric battery 41 is housed inside the front half-body 16.

In this way, a better distribution of the weights is obtained between the front half-body and the rear half-body.

According to an embodiment, the elongated steering element 31 comprises a hollow tubular element, and the electric battery 41 is housed inside said hollow tubular element.

Those skilled in the art may make changes and adaptations to the above-described embodiments of the device or replace elements with others, which are functionally equivalent in order to meet contingent needs without thereby departing from the scope of the following claims. All the features described above as belonging to one possible embodiment may be implemented independently of the other described embodiments.

Moreover, the drawings are not necessarily to scale.

All the features described herein may be combined in any combination, except for the combinations in which at least some of such features mutually exclude one another.

## Claims

1. A foldable scooter (1) comprising:
- an elongated deck body (10) defining a longitudinal scooter axis (L-L) arranged along a main direction of development of said deck body (10) and defining an upper deck surface (11) adapted to support a person standing on said upper deck surface (11), said upper deck surface (11) being substantially flat and parallel to said longitudinal scooter axis (L-L);
- a front wheel (20) and a rear wheel (21) rotatably connected to a front end (10') and to a rear end (10") of said deck body (10), respectively, so as to rotate about respective rotation wheel axes (20', 21') arranged orthogonal to said longitudinal scooter axis (L-L) and parallel to said upper deck surface (11);
- a steering device (30) adapted to rotate the rotation axis of said front wheel (20') with respect to said deck body (10) about a steering axis (S-S) which is substantially orthogonal to said front wheel rotation axis (20'), to allow a change in the forward direction of said scooter (1);
- wherein said deck body (10) consists of a front half-body (15) and a rear half-body (16) hinged to each other about a hinge axis (C-C) tilted with respect to the longitudinal scooter axis (L-L) by a predetermined angle (α) so as to allow the configuration of said scooter (1) to be varied between an open use configuration, in which said front half-body (15) and said rear half-body (16) are aligned along said longitudinal scooter axis (L-L), and a folded, reduced encumbrance configuration in which said front half-body (15) and said rear half-body (16) are mutually rotated so as to bring the front wheel (20) and the rear wheel (21) side by side and parallel to each other and to the rotation axis of the front wheel (20') coaxially overlapping the rotation axis of the rear wheel (21').

2. A foldable scooter (1) according to claim 1, wherein said predetermined angle (α) is comprised between 65° to 85°, preferably of about 75°.

3. A foldable scooter (1) according to claim 2, wherein the hinge axis (C-C) lies on a hinge plane parallel to the upper deck surface (11).

4. A foldable scooter (1) according to at least one preceding claim, wherein the hinge axis (C-C) is arranged on a lower deck surface (12) opposite to said upper deck surface.

5. A foldable scooter (1) according to at least one preceding claim, wherein the front half-body (15) and the rear half-body (16) have a shape such as to join each other with shape continuity when said scooter (1) is in the open use configuration.

6. A foldable scooter (1) according to claim 3 or 4, wherein the lower deck surface (12) comprises at least one tapered surface portion (13) configured to allow said front half-body and said rear half-body approaching at a minimum distance each other when said scooter (1) is in a closed, reduced encumbrance configuration.

7. A foldable scooter (1) according to at least one preceding claim, comprising a locking device (25) for removably locking the front half-body (15) and the rear half-body (16) to each other when said scooter (1) is in the open use configuration.

8. A foldable scooter (1) according to at least one preceding claim, wherein the steering device (30) comprises:
- an elongated steering element (31) defining a lower end (31') and an opposite upper end (31") of the elongated steering element (31), said elongated steering element (31) being rotatably engaged with said deck body (10) at said lower end (31') of the elongated steering element to rotate about said steering axis (S-S);
- a front fork element (32) secured to said lower end (31') of said elongated steering element (31), to which front fork element (32), the front wheel (20) is rotatably constrained to rotate about the front wheel rotation axis (20'),
- a grippable handlebar (33) secured to said upper end (31") of the elongated steering element,
- wherein said elongated steering element (31) comprises a joint device (34) arranged to rotate said elongated steering element (31) in order to approach said deck body (10), when said scooter (1) is in a closed, reduced encumbrance configuration.

9. An foldable scooter according to claim 8, wherein the front fork element (32) has only one arm (32') extending only on a first side of the front wheel (20) thus leaving the opposite second side of the front wheel (20) free, said second wheel side being adapted to face the rear wheel (21) when the scooter (1) is in the closed, reduced encumbrance configuration.

10. A foldable scooter (1) according to at least one preceding claim, comprising an electric motor (41) associated with said rear wheel (21) or said front wheel (20), an electric battery (42) mounted on board said scooter (1) and adapted to power said electric motor (41), control means (43) for controlling said electric motor (41).

11. A foldable scooter (1) according to claim 10, wherein said electric battery is accommodated inside said deck body (10) or inside said steering device (30).
